(19) Europäisches Patentamt
European Patent Office
Office européen des brevets

(11) Veröffentlichungsnummer: **0 083 796**
**A1**

(12) # EUROPÄISCHE PATENTANMELDUNG

(21) Anmeldenummer: 82112042.5

(22) Anmeldetag: 28.12.82

(51) Int. Cl.$^3$: C 08 L 67/02

(30) Priorität: 11.01.82 US 338806

(43) Veröffentlichungstag der Anmeldung: 20.07.83 Patentblatt 83/29

(84) Benannte Vertragsstaaten: DE FR GB IT NL

(71) Anmelder: BAYER AG
Zentralbereich Patente, Marken und Lizenzen
D-5090 Leverkusen 1, Bayerwerk(DE)

(71) Anmelder: Mobay Chemical Corporation
Penn Lincoln Parkway West
Pittsburgh, Pennsylvania 15205(US)

(72) Erfinder: Bier, Peter, Dr.
Bodelschwinghstrasse 13
D-4150 Krefeld 1(DE)

(72) Erfinder: Reinert, Gerard E.
304 Friar Lane
Mc Murray, PA 15317(US)

(72) Erfinder: Carter, Russell P., Jr.
12 Orchard Drive
New Martinsville West Virginia 26155(US)

(54) **Flammwidrige Formmassen auf Basis von Polyethylenterephthalat, Verfahren zu ihrer Herstellung und ihre Verwendung zur Herstellung von Formkörpern.**

(57) Flammwidrige Polyethylenterephthalat-Formmassen, die pyrogene Kieselsäure und ein Polymeres enthalten, das bei Temperaturen über 260°C mit Polyethylenterephthalat unter Vernetzung reagiert, zeigen ein außergewöhnlich günstiges Brandverhalten.

EP 0 083 796 A1

0083796

BAYER AKTIENGESELLSCHAFT 5090 Leverkusen, Bayerwerk
Zentralbereich
Patente, Marken und Lizenzen Pv/bo/c
MOBAY CHEMICAL CORPORATION
Penn Lincoln Parkway West
Pittsburgh, PA 152o5, USA

Flammwidrige Formmassen auf Basis von Polyethylenterephthalat, Verfahren zu ihrer Herstellung und ihre Verwendung zur Herstellung von Formkörpern

---

Die Erfindung betrifft flammwidrige Formmassen auf Basis von Polyethylenterephthalat (PET), einem Flammschutzmittel, einem Polymeren, das bei Temperaturen über 260°C mit PET unter Vernetzung reagiert, pyrogener Kieselsäure und ggf. Füllstoffen und/oder Verstärkungsmitteln, ein Verfahren zur Herstellung dieser Formmassen und ihre Verwendung zur Herstellung von Formkörpern.

Es besteht ein Bedürfnis nach PET-Formmassen, die flammwidrig sind und im Brandfalle nicht tropfen. Insbesondere sollten diese PET-Formmassen ein Brandverhalten V0 gemäß der Prüfnorm von Underwriter's Laboratories, Bedingung UL-94-5V, aufweisen.

Überraschenderweise wurde gefunden, daß flammwidrige PET-Formmassen dann ein außergewöhnlich günstiges Brandverhalten aufweisen, wenn sie ein Flammschutzmittel, ein Polymeres, das bei Temperaturen über 260°C mit PET unter Vernetzung reagiert, pyrogene Kieselsäure und ggf. Füllstoffe und/oder Verstärkungsmittel enthalten.

Gegenstand der Erfindung sind also flammwidrige thermoplastische Polyethylenterephthalat-Formmassen enthaltend

I. 40 bis 95, vorzugsweise 50 bis 65, Gew.-Teile eines Polyethylenterephthalats mit einer Intrinsic-Viskosität (gemessen in Phenol/o-Dichlorbenzol (Gewichtsverhältnis 60 : 40) bei 25°C) von mehr als 0.4, vorzugsweise von 0.55 bis 1.0 dl/g.

II. 3 bis 20, vorzugsweise 5 bis 15, Gew.-Teile eines Flammschutzmittels,

III. 2 bis 20, vorzugsweise 5 bis 15, Gew.-Teile eines Polymeren, das bei Temperaturen über 260°C mit PET unter Vernetzung reagiert,

IV. 0.5 bis 10, vorzugsweise 1.5 bis 5, Gew.-Teile pyrogener Kieselsäure und ggf.

V. bis zu 300 Gew.-Teile Füllstoffe und/oder Verstärkungsmittel.

Weiterer Gegenstand der Erfindung ist ein Verfahren zur Herstellung dieser PET-Formmassen durch Homogenisieren der Komponenten in der Schmelze.

Ein weiterer Gegenstand der Erfindung ist die Verwendung dieser PET-Formmassen zur Herstellung von Formkörpern, insbesondere von Spritzgußartikeln.

Die Polyethylenterephthalate (I) enthalten mindestens 80, vorzugsweise mindestens 90, Mol.-%, bezogen auf die

Dicarbonsäurekomponente, Terephthalsäurereste und mindestens 80, vorzugsweise mindestens 90, Mol-%, bezogen auf die Diolkomponente, Ethylenglykolreste.

Die Polyethylenterephthalate (I) können neben Terephthalsäureresten bis zu 20 Mol-% Reste anderer aromatischer Dicarbonsäuren mit 8 bis 14 C-Atomen, aliphatischer Dicarbonsäuren mit 4 bis 8 C-Atomen oder cycloaliphatischer Dicarbonsäuren mit 8 bis 12 C-Atomen enthalten, wie z.B. Phthalsäure, Isophthalsäure, Naphthalin-2,6-dicarbonsäure, Diphenyl-4,4'-dicarbonsäure, Adipinsäure, Sebacinsäure, Cyclohexandiessigsäure.

Die Polyethylenterephthalate I können neben Ethylenglykolresten bis zu 20 Mol-% anderer aliphatischer Diole mit 3 bis 12 C-Atomen, cycloaliphatischer Diole mit 6 bis 15 C-Atomen und/oder aromatischer Diole mit 6 bis 21 C-Atomen enthalten, z.B. Reste von Propan-1,3-diol, Butan-1,4-diol, Pentan-1,5-diol, Hexan-1,6-diol, Cyclohexan-1,4-dimethanol, 3-Methylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(ß-hydroxiethoxi)-benzol, 2,2-Bis-(4-hydroxicyclohexyl)-propan, 2,4-Dihydroxi-1,1,3,3-tetramethylcyclobutan, 2,2-Bis-(3-ß-hydroxiethoxiphenyl)-propan und 2,2-Bis-(4-hydroxipropoxiphenyl)-propan.

Die Polyethylenterephthalate I können durch Einbau relativ kleiner Mengen von 3- oder 4-wertigen Alkoholen

oder 3- oder 4-basischen Carbonsäuren, wie sie in der DE-OS 1900 270 und der US 3692 744 beschrieben sind, verzweigt werden. Beispiele bevorzugter Verzweigungsmittel sind Trimesinsäure, Trimellithsäure, Trimethylolethan- und -propan und Pentaerythrit. Es ist ratsam, nicht mehr als 1 Mol-% des Verzweigungsmittels, bezogen auf die Säurekomponente, zu verwenden.

Besonders bevorzugt sind Polyethylenterephthalate I, die allein aus Terephthalsäure oder deren reaktionsfähigen Derivaten (z.B. deren Dialkylestern oder Anhydriden) und Ethylenglykol hergestellt worden sind.

Die für die erfindungsgemäßen Formmassen bevorzugten Flammschutzmittel II umfassen eine Vielzahl chemischer Verbindungen, die dem Fachmann gut bekannt sind. Allgemein enthalten sie chemische Elemente, die wegen ihrer entflammungshemmenden Fähigkeit verwendet werden, z.B. Brom, Chlor, Antimon, Phosphor und Stickstoff (vgl. z.B. US 41 36 089). Vorzugsweise bestehen die Flammschutzmittel II aus halogenierten organischen Verbindungen (bromiert oder chloriert), gegebenenfalls im Gemisch mit organischen oder anorganischen Antimonverbindungen, z.B. Antimontrioxid; aus elementarem Phosphor oder Phosphorverbindungen; aus halogenhaltigen Verbindungen im Gemisch mit Phosphorverbindungen oder Verbindungen, die Phosphor-Stickstoff-Bindungen enthalten.

Bevorzugte halogenhaltige Flammschutzmittel II sind solche der Formel

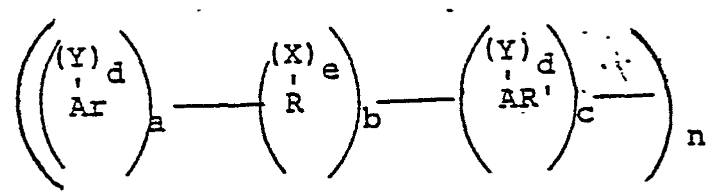

worin

n eine ganze Zahl von 1 bis 10 und

R ein Alkylen- oder Alkylidenrest mit 1 bis 20 C-Atomen oder ein Cycloalkylen- oder Cycloalkylidenrest mit 5 bis 20 C-Atomen, z.B. Methylen, Ethylen, Propylen, Isopropylen, Isopropyliden, Butylen, Isobutylen, Amylen, Cyclohexylen, Cyclopentyliden sind;

R kann auch ein Sauerstoffatom, eine Carbonylgruppe, ein Schwefelatom oder eine schwefelhaltige Gruppe, wie eine Sulfoxid- oder eine Sulfongruppe; eine Carbonatgruppe; eine phosphorhaltige Gruppe bedeuten; R kann auch aus zwei oder mehr Alkylen- oder Alkylidengruppen bestehen, die durch solche Gruppen wie aromatische Reste, Sauerstoffatome, Ester- oder Carbonylgruppen, Schwefelatome, Sulfoxid- oder Sulfongruppen oder phosphorhaltige Gruppierungen miteinander verbunden sind. Schließlich kann R auch ein zweiwertiger Phenolrest, wie der des Bisphenols-A, oder eine Carbonatgruppe sein.

Ar und Ar' sind mono- oder polycarbocyclische aromatische Gruppen mit 6 bis 24 C-Atomen, wie Phenylen, Biphenylen, Terphenylen, Naphthylen.

Y bedeutet organische, anorganische oder metallorganische Reste. Die durch Y repräsentierten

Substituenten umfassen Halogen, wie Chlor, Brom, Jod oder Fluor, Hydroxyl- oder Ethergruppen der allgemeinen Formel OE, worin E ein einwertiger Kohlenwasserstoffrest, wie z.B. X ist, oder einwertige Kohlenwasserstoffreste der durch R repräsentierten Art oder andere Substituenten, wie Nitro, Cyan, wobei die genannten Substituenten im wesentlichen inert sind und vorausgesetzt wird, daß mindestens 1 und vorzugsweise 2 Halogenatome pro Arylkern vorhanden sind.

X ist ein einwertiger Kohlenwasserstoffrest mit 1 bis 20 C-Atomen, wobei die folgenden Beispiele genannt seien: Alkyl, wie Methyl, Ethyl, Propyl, Isopropyl, Butyl, Decyl; Aryl, wie Phenyl, Naphthyl, Biphenylyl, Xylyl, Tolyl; Aralkyl, wie Benzyl, Ethylphenyl; einwertige cycloaliphatische Reste, wie Cyclopentyl, Cyclohexyl. Bei Anwesenheit von mehr als einer Gruppierung X können diese Gruppen gleich oder verschieden sein.

Der Buchstabe d in der obigen Formel steht für eine ganze Zahl von 1 bis zum Maximaläquivalent der Zahl der ersetzbaren Wasserstoffe, die an die aromatischen Ringe Ar oder Ar' gebunden sind. Der Buchstabe e steht für Null oder eine ganze Zahl von 1 bis zu der Maximalzahl der ersetzbaren Wasserstoffe an R.
Die Buchstaben a, b und c stehen für Null oder ganze Zahlen von 1 bis 24. Wenn b nicht Null ist, dann können

weder a noch c Null sein. Sonst können entweder a oder c, aber nicht beide Null sein. Wenn b Null ist, sind die aromatischen Reste durch eine direkte Kohlenstoff-Kohlenstoff-Bindung miteinander verbunden.

Die Hydroxyl- und Y-Substituenten an den aromatischen Resten Ar und Ar' können in ortho-, meta- oder para-Stellung an den aromatischen Ringen stehen und die Reste können jede mögliche Verknüpfung zueinander haben.

In den Rahmen der obigen Formel fallen die folgenden bevorzugten Verbindungen:

2,2-Bis-(3,5-dichlorphenyl)-propan,
Bis-(2-chlorphenyl)-methan,
Bis-(2,6-dibromphenyl)-methan,
1,1-Bis-(4-jodphenyl)-ethan,
1,2-Bis-(2,6-dichlorphenyl)-ethan,
1,1-Bis-(2-chlor-4-jodphenyl)-ethan,
1,1-Bis-(2-chlor-4-methylphenyl)-ethan,
1,1-Bis-(3,5-dichlorphenyl)-ethan,
2,2-Bis-(3-phenyl-4-bromphenyl)-ethan,
2,2-Bis-(4,6-dichlornaphthyl)-propan,
2,2-Bis-(2,6-dichlorphenyl)-pentan,
2,2-Bis-(3,5-dichlorphenyl)-hexan,
Bis-(4-chlorphenyl)-phenylmethan,
Bis-(3,5-dichlorphenyl)-cyclohexylmethan,
Bis-(3-nitro-4-bromphenyl)-methan,

Bis-(4-hydroxi-2,6-dichlor-3-methoxiphenyl)-methan,
2,2-Bis-(3,5-dichlor-4-hydroxiphenyl)-propan,
2,2-Bis-(3-brom-4-hydroxiphenyl)-propan.

In den Rahmen der obigen Strukturformel fallen auch substituierte Benzole, wie vorzugsweise Tetrabrombenzol, Hexachlorbenzol, Hexabrombenzol und Biphenyle, wie 2,2'-Dichlorbiphenyl, 2,4'-Dibrombiphenyl, 2,4'-Dichlorbiphenyl, Hexabrombiphenyl, Octabrombiphenyl, Decabrombiphenyl und halogenierte Diphenylether, die 2 bis 10 Halogenatome enthalten.

Die besonders bevorzugten Halogenverbindungen im Rahmen dieser Erfindung sind die aromatischen Halogenverbindungen, wie chloriertes Benzol, bromiertes Benzol, chloriertes Biphenyl, chloriertes Terphenyl, bromiertes Biphenyl, bromiertes Terphenyl oder eine Verbindung, die zwei Phenylreste enthält, die durch eine zweiwertige Alkylengruppe miteinander verbunden sind und mindestens zwei Chlor- oder Bromatome pro Phenylkern trägt.

Insbesondere bevorzugt sind Hexabrombenzol und bromierte oder chlorierte Biphenyle oder Terphenyle allein oder im Gemisch mit Antimontrioxid.

Im allgemeinen sind die bevorzugten Phosphor-haltigen Flammschutzmittel II ausgewählt aus elementarem Phosphor oder organischen Phosphorverbindungen, wie z.B. Phosphonsäuren, Phosphonaten, Phosphinaten,

Phosphoniten, Phosphiniten, Phosphinoxiden, Phosphinen, Phosphiten oder Phosphaten.

Beispielhaft für diese Verbindungsklasse ist Triphenylphosphinoxid. Sie können entweder allein oder im Gemisch mit Hexabrombenzol oder einem chlorierten Biphenyl und gegebenenfalls Antimontrioxid verwendet werden.

Typisch für die bevorzugten Phosphorverbindungen, die im Rahmen der vorliegenden Erfindung angewendet werden können, sind solche der Formel

$$\begin{array}{c} O \\ \| \\ QO - P - OQ \\ | \\ OQ \end{array}$$

und deren Stickstoffanaloge, worin Q für gleiche oder verschiedene Reste steht, z.B. Kohlenwasserstoffreste mit 1 bis 12 C-Atomen, wie Alkyl, Cycloalkyl, Aryl, Alkyl-substituiertes Aryl und Aryl-substituiertes Alkyl; Halogen, Wasserstoff oder deren Kombinationen, vorausgesetzt, daß mindestens einer der Reste Q ein Arylrest ist. Bevorzugte Beispiele geeigneter Phosphate umfassen die folgenden:

Phenylbisdodecylphosphat, Phenylbisneopentylphosphat, Phenylethylenhydrogenphosphat, Phenyl-bis-(3,5,5'-trimethylhexylphosphat), Ethyldiphenylphosphat,

2-Ethylhexyldi-(p-tolyl)-phosphat, Diphenylhydrogenphosphat, Bis-(2-ethyl-hexyl)-p-tolylphosphat, Tritolylphosphat, Bis-(2-ethylhexyl)-phenylphosphat, Tri-(nonylphenyl)-phosphat, Phenylmethylhydrogenphosphat, Di-(dodecyl)-p-tolylphosphat, Tricresylphosphat, Triphenylphosphat, halogeniertes Triphenylphosphat, Dibutylphenylphosphat, 2-Chlorethyldiphenylphosphat, p-Tolyl-bis-(2,5,5'-trimethylhexyl)-phosphat, 2-Ethylhexyldiphenylphosphat, Diphenylhydrogenphosphat. Die besonders bevorzugten Phosphate sind solche, in denen jeder Rest Q aromatischer Natur ist. Das bevorzugte Phosphat ist Triphenylphosphat. Es wird auch Triphenylphosphat in Kombination mit Hexabrombenzol und gegebenenfalls Antimontrioxid eingesetzt.

Weiterhin können die bevorzugten Phosphorverbindungen in ihrer polymeren Form verwendet werden. Besonders bevorzugte Verbindungen dieser Art sind Poly-(4,4'-dioxidiphenyl)-methylphosphonat oder Poly-(4,4'-dioxidiphenyl-2,2-propan)-methylphosphonat.

Ebenfalls bevorzugt als entflammungshemmende Zusätze sind solche Verbindungen, die Phosphor-Stickstoff-Bindungen enthalten, wie Phosphonitrilchlorid, Phosphoresteramide, Phosphorsäureamide, Phosphonsäureamide, Phosphinsäureamide, Tri-(aziridinyl)-phosphinoxid oder Tetrakis-(hydroximethyl)-phosphoniumchlorid.

Besonders bevorzugte Flammschutzmittel II sind Oligomere eines Carbonates eines halogenierten zweiwertigen Phenols. Die bevorzugten dieser Oligomeren enthalten 2 bis 20 wiederkehrende Einheiten der Formel

0083796

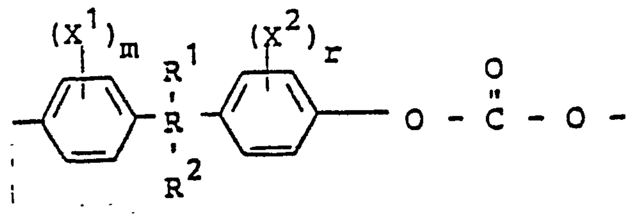

worin

$R^1$ und $R^2$ Wasserstoff, Alkyl mit 1 bis 4 C-Atomen oder Phenyl sind,

$X^1$ und $X^2$ Brom oder Chlor sind und

m und r eine ganze Zahl von 1 bis 4 bedeuten.

Diese oligomeren Zusätze haben bis zu Temperaturen von über 200°C eine geringe Flüchtigkeit sowie einen Erweichungspunkt von weniger als etwa 300°C. Sie können allein oder in Kombination mit synergistisch wirkenden Stoffen, wie anorganischen oder organischen Antimonverbindungen, eingesetzt werden.

Besonders bevorzugte Flammschutzmittel II sind halogenierte organische Verbindungen mit einem Schmelzpunkt über 240°C, die mindestens eine Imidgruppe pro Molekül enthalten, in Kombination mit anorganischen oder organischen Antimonverbindungen. Bevorzugte Imidgruppen haltige Flammschutzmittel II umfassen halogenierte N,N'-Arylen-di-phthalimide, in denen der Arylenrest ein Phenylen-, Diphenylen-, Naphthylenrest oder ein Rest der Formel

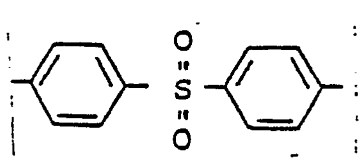

ist;

tetrahalogenierte unsubstituierte und tetrahalogenierte $C_1$-$C_6$-alkylsubstituierte Phthalimide und Cyclohexyldicarboximide; über einen $C_1$-$C_6$-Alkylen- oder einen $C_6$-$C_{12}$-Arylenrest verknüpfte N,N'-Bis-(dibromcyclohexandicarboximide) und N,N'-$C_1$-$C_6$-Alkylen-bis-(tetrahalogenphthalimide).

Insbesondere bevorzugte Imide dieser Art entsprechen der Formel

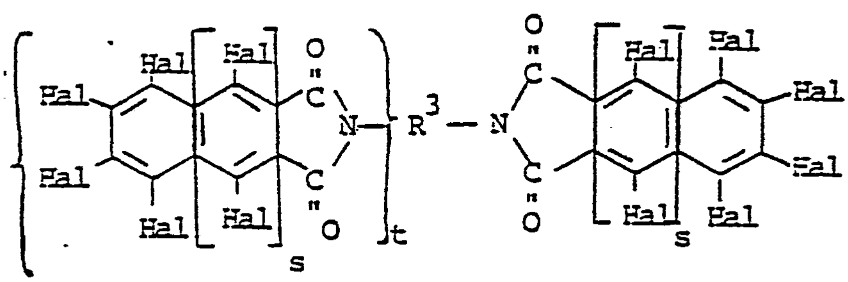

worin

Hal Halogen, insbesondere Chlor oder Brom,

$R^3$ ein $C_1$-$C_6$-Alkyl- oder Alkylenrest, ein Phenyl- oder Phenylenrest, ein Toluyl- oder Toluylenrest, ein Cyclohexyl- oder Cyclohexylenrest, ein Rest der Formel

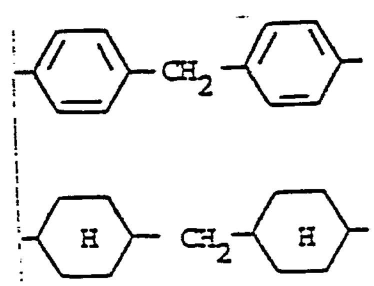

oder

,

ein Naphthyl- oder Naphthylenrest oder eine Einfachbindung,

s, t Null oder 1 sind.

Die für die vorliegende Erfindung bevorzugten N,N'-$C_1$-$C_6$-Alkylen-bis-(tetrahalogenphthalimide) sowie ein Verfahren zu ihrer Herstellung sind aus der US 40 87 441 bekannt.

Die bevorzugten N,N'-Alkylen-bis-(tetrahalogenphthalimide) entsprechen der obigen Formel, wobei

$R^3$ einen $C_2$-$C_6$-Alkylenrest, vorzugsweise einen Ethylenrest,

Hal Chlor, vorzugsweise aber Brom,

s Null und

t 1 bedeuten.

Das bevorzugteste N,N'-Alkylen-bis-(tetrahalogenphthalimid) ist N,N'-Ethylen-bis-(tetrabromphthalimid). Die Verwendung dieser Verbindung als Flammschutzmittel für Polyester, z.B. auch PET, ist bekannt (japanische Anmeldung JS-119 041; GB 12 87 934, US 36 24 024, 38 73 567).

Andere bevorzugte Imide umfassen 1,4,5,6-Tetrabrom-2,3-phthalimid, N-Methylol-tetrabromphthalimid, N,N'-Bis-(1,4,5,6-tetrabrom-2,3-phthalimid), N,N'-p-Phenylen-di-tetrachlorphthalimid, N,N'-Di-tetrachlorphthalimid, N,N'-p-Phenylen-di-tetrabromphthalimid, N,N'-Bis-(5,6-dibrom-cyclohexan-2,3-dicarboximid) und N,N'-1,2-Ethan-bis-(5,6-dibromcyclohexan-2,3-dicarboximid).

Weitere bevorzugte Imide sind aus GB 12 87 934 und US 38 68 388, 38 73 567, 39 15 930, 39 23 734, 40 019 179 und 40 03 862 bekannt.

Polymere III, die bei Temperaturen über 260°C mit I unter Vernetzung reagieren, sind vornehmlich Pfropfpolymerisate, verzweigte bzw. teilvernetzte Polymerisate mit Ester- und/oder Nitrilgruppen. Bevorzugte Polymere III sind Pfropfpolymerisate.

Diese Propfpolymerisate III werden durch Polymerisation von olefinisch ungesättigten Monomeren in Gegenwart des Präpolymeren (A) erhalten, wobei ein wesentlicher Teil der Monomeren auf das Präpolymere (A) aufgepfropft wird. Die Herstellung derartiger Pfropfpolymerisate ist im Prinzip bekannt (R.J. Ceresa, Block and Graft Copolymers, Butterworth, London 1962).

Besonders bevorzugte Polymere III sind Pfropfpolymerisate aus

(A) 25 bis 95 Gew.-Teilen eines Copolymerisats von

(a) 75 bis 99,8 Gew.-Teilen eines $C_1$-$C_6$-Alkylacrylats,

(b) 0,1 bis 5 Gew.-Teile eines Monomeren mit mindestens zwei nicht konjugierten olefinischen Doppelbindungen und

(c) 0 bis 40 Gew.-Teilen weiterer Monomerer, als Pfropfgrundlage und

(B) 75 bis 5 Gew.-Teilen eines durch Polymerisation mindestens eines olefinisch ungesättigten Monomeren

erhaltenen Harzes, das in Gegenwart von (A) hergestellt worden ist.

Bevorzugtes $C_1$-$C_6$-Alkylacrylat (a) ist n-Butylacrylat.

Bevorzugte Monomere (b) mit mindestens zwei nicht konjugierten Doppelbindungen pro Molekül sind Acryl- und Methacrylsäureester von mehrwertigen Alkoholen, insbesondere solchen mit 2 bis 8 C-Atomen und 2 bis 4 Hydroxylgruppen, z.B. Butylendiacrylat und -dimethacrylat, Trimethylolpropantrimethacrylat; Di- und Trivinylbenzol, Vinylacrylat und -methacrylat; Allylester ungesättigter Mono- und Dicarbonsäuren, wie z.B. Allylacrylat und -methacrylat, Diallylmaleat, -fumarat und -itaconat, Malein-, Fumar- und Itaconsäuremonoallylester; Diallylester von Polycarbonsäuren, die keine polymerisationsfähige Doppelbindung enthalten.

Besonders bevorzugte Monomere (b) sind Butylendiacrylat, Allylmethacrylat und Diallylmaleat.

Bevorzugte weitere Monomere (c) sind Ethylen, Isopren, Vinylether, Butadien, Styrol, Vinylester, Vinylhalogenide, vinylsubstituierte heterocyclische Verbindungen wie Vinylpyrrolidon, Acrylnitril und Mischungen dieser Monomeren.

Bevorzugte olefinisch ungesättigte Monomere zur Herstellung des Anteils (B) sind $C_1$-$C_4$-Alkylacrylate und -methacrylate, Styrol und Acrylnitril. Vorzugsweise enthalten diese zur Herstellung des Anteils (B) verwandten Monomeren mindestens 50 Gew.-% $C_1$-$C_4$-Alkylmethacrylat.

Es ist vorteilhaft, wenn die Pfropfpolymerisate III einen beträchtlichen Gehalt an polaren Gruppen aufweisen. Zweckmäßig wählt man Produkte aus, die zu mehr als 10 Gew.-% aus (Meth)-Acrylsäureestern und (Meth)-Acrylnitril aufgebaut sind. Sofern der Gehalt an (Meth)-Acrylestern mehr als 70 Gew.-% beträgt, verzichtet man zweckmäßig auf (Meth)-Acrylnitril als Baustein.

Bevorzugte Pfropfpolymerisate III sind solche aus
60-95 Gew.-% Pfropfgrundlage und
40-5 Gew.-% Pfropfauflage, wobei die Pfropfgrundlage aus einem Monomerengemisch enthaltend
95-99,8 Gew.-% Butylacrylat,
0,1-2,5 Gew.-% Butylendiacrylat und
0,1-2,5 Gew.-% Allylmethacrylat oder Diallylmaleat und die Pfropfauflage zu
60 bis 100 Gew.-% aus Methylmethacrylat und
40 bis 0 Gew.-% anderer Monomerer
erhältlich sind.

Die bevorzugten Pfropfpolymerisate III besitzen einen mittleren Teilchendurchmesser $d_{50}$ (gemessen mittels Ultrazentrifuge nach W. Sholtan, H. Lange, Kolloid. Z. u. Z. Polymere 250, 782-796 (1972)) von 0,2 bis 0,6, vorzugsweise 0,3 bis 0,5 µm. Die Pfropfhüllen derartiger Pfropfpolymerisate III bestehen mindestens zu 5 Mol-%, vorzugsweise mindestens zu 25 Mol-%, aus Resten Estergruppen- oder Nitrilgruppen-haltiger Monomerer.

Besonders bevorzugte Pfropfpolymerisate III lassen sich nach üblichen Emulsionspolymerisationsverfahren in mehreren Stufen aus n-Butylacrylat, 1,3-Butylendiacrylat und Diallylmaleat in erster Stufe und Methylmethacrylat in zweiter Stufe herstellen, wobei das bevorzugte Monomerverhältnis (bezogen auf Gewicht) etwa 79,2/0,4/0,4/20,0 beträgt.

Der Vernetzungsgrad der ersten Stufe - ausgedrückt als Quotient aus dem Gewichtsanteil vernetzender Monomerer (bezogen auf die Gesamtsumme der Monomeren der ersten Stufe) und der Anzahl der funktionellen Gruppen der vernetzenden Monomeren beträgt vorzugsweise 0,05 - 1,25 %.

Andere besonders bevorzugte Pfropfpolymerisate III sind durch Pfropfreaktion von

I. 10-40 Gew.-%, bezogen auf III, einer oder mehrerer (Meth)-Acrylsäure-$C_1$-$C_6$-alkyl-ester, die bis zur Hälfte durch Acryl-nitril ersetzt sein können, auf

II. 60-90 Gew.-%, bezogen auf III, eines Butadien-Polymerisats mit mindestens 70 Gew.-%, bezogen auf II, Butadienresten als Pfropfgrundlage erhältlich, wobei vorzugsweise der Gelanteil der Pfropfgrundlage II $>$ 70 Gew.-% (in Toluol gemessen), der Pfropfgrundlage G 0,15-0,55 und der mittlere Teilchendurchmesser $d_{50}$ des Pfropfpolymerisats III 0,2-0,6 µm betragen.

Andere besonders bevorzugte Pfropfpolymerisate III sind durch Pfropfreaktion von

I. 10-40, vorzugsweise 10-35, insbesondere 15-25, Gew.-%, bezogen auf III, eines Gemisches aus

a) 10-35, vorzugsweise 20-35, Gew.-%, bezogen auf die Summe a + b, Acrylnitril und

b) 65-90, vorzugsweise 65-80, Gew.-%, bezogen auf die Summe a + b, Styrol auf

II. 60-90, vorzugsweise 65-90, insbesondere 75-80, Gew.-%, bezogen auf III, eines Butadien-Polymerisats mit mindestens 70 Gew.-%, bezogen auf II, Butadienresten als Pfropfgrundlage erhältlich, wobei vorzugsweise der Gelanteil der Pfropfgrundlage II $>$ 70, vorzugsweise $>$ 80, Gew.-% (in Toluol gemessen), der Pfropfgrad G 0,15-0,55 und der mittlere Teilchendurchmesser $d_{50}$ des ABS-Pfropfpolymerisats III 0,2-0,6, vorzugsweise 0,3-0,5, insbesondere ca. 0,4 µm betragen.



BAD ORIGINAL

Die Butadienpolymerisate können bis zu 30 Gew.-% Reste an anderen Monomeren enthalten.

Unter pyrogener Kieselsäure IV versteht man durch Flammenhydrolyse aus Siliciumtetrachlorid, Wasserstoff und Sauerstoff oder im Lichtbogenverfahren aus Quarz hergestellte synthetische Kieselsäuren; vgl. H. Ferch, Chem.-Ing.-Tech. 48, Nr. 11, 922-933 (1976). Für die erfindungsgemäßen Formmassen werden die durch Flammenhydrolyse hergestellten Kieselsäuren bevorzugt.

Bevorzugte Verstärkungsmittel V sind Glasfasern. Zusätzlich können den erfindungsgemäßen Formmassen aber auch Pigmente, Farbstoffe, Stabilisatoren, Nukleiermittel, UV-Absorber, Gleit- und Entformungsmittel zugesetzt werden.

Den erfindungsgemäßen Formmassen können zur besseren Verarbeitung bei niedrigen Formtemperaturen auch die Oligoester der US 42 23 113 zugesetzt werden.

Das Mischen der Komponenten I-IV bzw. I-V und evtl. weiterer Hilfs- und Zusatzstoffe kann auf übliche Weise, z.B. in Knetern oder Ein- bzw. Zweiwellenextrudern, erfolgen.

Die Spritzgußbedingungen für PET-Formmassen sind bekannt; vgl. US 35 16 957 und Ervin J. Rubin, Injection Molding Theory and Praxis, Wiley Interscience, 1972.

In den folgenden Beispielen angegebene Teile bedeuten Gewichtsteile; Prozentangaben beziehen sich auf das Gewicht.



BAD ORIGINAL

Beispiele

Es wurden folgende Materialien eingesetzt:

PET mit einer Intrinsic-Viskosität von 0,62 dl/g, gemessen als 0,5 %ige Lösung in Phenol/Tetrachlorethan (Gewichtsverhältnis 1:1) bei 25°C;

N,N'-Ethylen-bis-(tetrabromphthalimid) als Bromverbindung der Flammschutzmittelkombination (ETPJ);

ein Pfropfpolymerisat (A) entsprechend Beispiel 26 der US 40 96 202 auf Basis von n-Butylacrylat, 1,3-Butylendiacrylat, Diallylmaleat und Methylmethacrylat ("Pfropf");

Pfropfpolymerisat (B) mit 80 % Pfropfgrundlage aus vernetztem Polybutadien und 20 % Pfropfauflage aus Polymethylmethacrylat;

Pfropfpolymerisat (C) mit 80 % Pfropfgrundlage aus vernetztem Polybutadien und 20 % Pfropfauflage aus 6 Teilen Methylmethacrylat und 4 Teilen Acrylnitril;

pyrogene Kieselsäure, Antimontrioxid und Kurzglasfasern. Die Formmassen enthielten Mikrotalk als Nukleiermittel und weniger als 0,3 % Stabilisator.

Die Formmassen wurden bei einer Massetemperatur von 250°C verspritzt; die Formtemperatur betrug 100°C.



BAD ORIGINAL

Prüfstäbe der Abmessungen 127 x 12,7 x 1,6 mm ("1/16 Zoll") wurden nach einer hausinternen Variante von UL 94 - 5V (nachfolgend "UL 94-10V" genannt) geprüft, wobei für die Einstufung des Brandverhaltens folgende Kritierien galten:

5 Teststäbe, die im Abstand von 5 sec. 10 mal für jeweils 5 sec. mittels Bunsenbrenner entflammt werden, dürfen

1. keinen Teststab enthalten, der nach dem 10. Entflammen länger als 60 sec. weiterbrennt oder -glüht;

2. keinen Teststab enthalten, der tropft, und

3. keinen Teststab enthalten, der in der beflammten Zone merklich zerstört wird.

Die in der nachfolgenden Tabelle angegebenen Mengen sind Gewichtsteile.



BAD ORIGINAL

| | Vergleich 1 | Vergleich 2 | Beispiel 1 | Beispiel 2 | Beispiel 3 |
|---|---|---|---|---|---|
| PET | 9.52 | 11.2 | 9.52 | 9.52 | 9.52 |
| ETPI | 2.1 | 2.1 | 2.1 | 2.1 | 2.1 |
| $Sb_2O_3$ | 0.7 | 0.7 | 0.7 | 0,7 | 0,7 |
| Pfropf | 1.68 (A) | - | 1.68 (A) | 1.68 (B) | 1.68 (C) |
| Kiesel-säure | - | 1.0 | 1.0 | 1.0 | 1.0 |
| Glas-fasern | 6.0 | 6.0 | 6.0 | 6,0 | 6,0 |
| UL 94-"10 V" | nicht be-standen: tropft nach 6. Entflammen | nicht be-bestanden: tropft nach 4. Entflammen | bestanden | bestanden | bestanden |

Patentansprüche

1. Flammwidrige thermoplastische Polyethylenterephthalat-Formmassen enthaltend

   I. 40 bis 95 Gew.-Teile eines Polyethylenterephthalats mit einer Intrinsic-Viskosität (gemessen in Phenol/o-Dichlorbenzol (Gewichtsverhältnis 60:40) bei 25°C) von mehr als 0,4 dl/g,

   II. 3 bis 20 Gew.-Teile eines Flammschutzmittels,

   III. 2 bis 20 Gew.-Teile eines Polymeren, das bei Temperaturen über 260°C mit PET unter Vernetzung reagiert,

   IV. 0,5 bis 10 Gew.-Teile pyrogene Kieselsäure und gegebenenfalls

   V. bis zu 300 Gew.-Teile Füllstoffe und/oder Verstärkungsmittel.

2. Formmassen nach Anspruch 1, dadurch gekennzeichnet, daß sie 50 bis 65 Gew.-Teile I enthalten.

3. Formmassen nach Ansprüchen 1 und 2, dadurch gekennzeichnet, daß die Komponente I eine Intrinsic-Viskosität von 0,55 bis 1,0 dl/g (gemessen in Phenol/o-Dichlorbenzol (Gewichtsverhältnis 60:40) bei 25°C) aufweist.

4. Formmassen nach Ansprüchen 1-3, dadurch gekennzeichnet, daß sie 5 bis 15 Gew.-Teile II enthalten.

5. Formmassen nach Ansprüchen 1-4, dadurch gekennzeichnet, daß sie 5 bis 15 Gew.-Teile III enthalten.

6. Formmassen nach Ansprüchen 1-5, dadurch gekennzeichnet, daß sie 1,5 bis 5 Gew.-Teile IV enthalten.

7. Verfahren zur Herstellung der Formmassen nach Ansprüchen 1-6 durch Homogenisieren der Komponenten in der Schmelze.

8. Verwendung der Formmassen nach Ansprüchen 1-6 zur Herstellung von Formkörpern, insbesondere von Spritzgußartikeln.

Europäisches Patentamt

# EUROPÄISCHER RECHERCHENBERICHT

0083796

Nummer der Anmeldung

EP 82 11 2042

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | FR-A-2 359 176 (HOECHST)<br>* Patentansprüche 1-3 *<br>--- | 1,6 | C 08 L 67/02 |
| Y | US-A-4 092 289 (TIMOTHY ALAN REMMINGTON)<br>* Patentansprüche 1-12 *<br>--- | 1,6 | |
| Y | EP-A-0 030 618 (BAYER)<br>* Patentansprüche 1-10 *<br>--- | 1-5 | |
| A | FR-A-2 354 370 (ROHM AND HAAS)<br>* Patentansprüche 1-10 *<br>--- | 1 | |
| A | FR-A-2 150 989 (GENERAL ELECTRIC)<br>* Patentanspruch 1 *<br>----- | 1 | |
| | | | RECHERCHIERTE SACHGEBIETE (Int. Cl. 3) |
| | | | C 08 L 67/02 |

Der vorliegende Recherchenbericht wurde für alle Patentansprüche erstellt.

| Recherchenort | Abschlußdatum der Recherche | Prüfer |
|---|---|---|
| DEN HAAG | 29-03-1983 | DECOCKER L. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82